# EUROPÄISCHE PATENTSCHRIFT

(11) **EP 1 265 962 B1**
(45) Veröffentlichungstag und Bekanntmachung des Hinweises auf die Patenterteilung: **26.11.2003**
(21) Anmeldenummer: 01907571.2
(22) Anmeldetag: 26.02.2001
(51) Int. Cl.: C08L 77/00, C08J 5/00, C08K 7/14, B29C 45/00, C08K 3/34, C08K 13/04

(54) **HYDROLYSERESISTENTE POLYAMID-FORMMASSEN FÜR GASINJEKTIONSTECHNIK**
HYDROLYSIS-RESISTANT POLYAMIDE MOLDING MATERIALS FOR USE IN GAS INJECTION TECHNIQUES (GIT)
MATIERES A MOULER A BASE DE POLYAMIDE RESISTANT A L'HYDROLYSE A UTILISER DANS LA TECHNIQUE D'INJECTION ASSISTEE PAR GAZ (IAG)

(30) Priorität: 10.03.2000 DE 10011452
(43) Veröffentlichungstag der Anmeldung: 18.12.2002
(73) Patentinhaber: Bayer Aktiengesellschaft, 51368 Leverkusen (DE)
(72) Erfinder: JOACHIMI, Detlev, 47800 Krefeld (DE); SAUER, Roland, 58540 Meinerzhagen (DE)
(86) Internationale Anmeldenummer: EP0102218
(87) Internationale Veröffentlichungsnummer: WO01068771

(56) Entgegenhaltungen:
- EP-A- 0 597 648
- EP-A- 0 963 875
- DE-A- 19 744 107
- US-A- 5 133 316

## Beschreibung

Die Erfindung betrifft die Verwendung von Zusammensetzungen aus verstärktem PA für den Einsatz im Kühlkreislauf, die bei Verarbeitung im GIT-Verfahren zu Formteilen mit glatten Innenoberflächen und guter Hydrolysebeständigkeit gegen Kühlmedium (Glykol/Wasser-Gemische) führen.

Für spritzgegossene Formteile im Kühlkreislauf von Kfz sind seit Jahren glasfaserverstärkte Polyamide erfolgreich im Einsatz, insbesondere Polyamid 66 (PA66) meist verstärkt mit 30 bis 35 Gew.-% Glasfasern. Typische Anwendungen sind der Kühlerwasserkasten und der Kühlwasserverteiler. Derartige Formteile weisen eine ausreichende Beständigkeit gegen das Kühlmedium (in den meisten Fällen Ethylenglykol/Wasser-Gemische 1:1) auch noch bei 130°C auf.

Neben den genannten Anwendungen wäre es u.a. im Sinne günstigerer Herslellkosten und höherer Gebrauchssicherheit und Langlebigkeit/Korrosionsbeständigkeit wünschenswert, die Metallrohre bzw. Gummischläuche im Kühlkreislauf ganz oder teilweise durch Thermoplastrohre zu ersetzen. Vorzugsweise sollte auch hier verstärktes PA66 zum Einsatz kommen, da es unter dem Gesichtspunkt kostengünstiger Fertigung momentan den besten Kompromiss zwischen möglichst hoher Hydrolysebeständigkeit und niedrigen Materialkosten darstellt. Bei der Herstellung von Rohren im Spritzgießverfahren ist man jedoch durch die möglichen Geometrien beschränkt. Die Herstellung gekrümmter Rohre ist im Standardspritzgießverfahren nicht möglich. Für die Herstellung von Hohlkörpern mit gekrümmten Innenoberflächen existieren zwar auch spezielle Verfahren (z.B. Kemausschmelzverfahren) die jedoch mit hohen zusätzlichen Kosten verbunden sind.

Eine kostengünstige Alternative könnte die Spritzgießverarbeitung im GIT-Verfahren (GIT = Gasinjektionstechnik) sein, die jedoch normalerweise zu sehr rauhen Innenoberflächen führt, die durch ihre große Oberfläche verstärkt von durchströmendem Kühlmedium angegriffen werden können. Außerdem besteht eine erhöhte Gefahr der Ablösung von Glasfasern aus der Oberfläche, die dann möglicherweise im Kühlkreislauf zirkulieren und abrasive Wirkung entfalten bzw. zu partiellen Ansammlungen oder sogar Verstopfungen führen könnten. Der vollständige Verzicht auf Glasfasern führt zwar zu glatteren Innenoberflächen, die mechanischen Eigenschaften der Formteile sind aber dann nicht mehr ausreichend (zu niedriger E-Modul, zu niedrige Festigkeit) und die Hydrolysebeständigkeit wird stark reduziert. Etwas bessere Hydrolysebeständigkeit lässt sich durch die Kombination Glasfasern/Glaskugeln erreichen, das Gesamteigenschaftsniveau derartiger Compounds ist aber nicht ausreichend. Ähnliches trifft für Compounds zu, die nur mit Mineral verstärkt sind.

Aufgabe der Erfindung war es, ein Material und ein Verfahren zur Verfügung zu stellen, das die Herstellung von Formteilen mit glatter Innenoberfläche und guter Hydrolysebeständigkeit gegen Kühlmedium (Glykol/Wasser-Gemische) im Gasinjektionsspritzgießverfahren (GIT-Verfahren) ermöglicht.

Überraschend wurde nun gefunden, dass die Kombination von Glasfasern mit Glimmer, insbesondere mit Phlogopit-Glimmer im PA66-Compound zu Materialien führt, die bei üblicher Additivierung nicht nur für die Herstellung von Rohren im Gasinjektionsverfahren geeignet sind, sondern auch Fertigteile mit relativ glatter Innenoberfläche und sehr guter Hydrolysebeständigkeit ergeben. Besonders gute Fertigteilqualität hinsichtlich glatter Innenoberfläche und gleichmäßiger Wanddickenverteilung wurde durch folgende Anpassungen der (in Kunststoffe 1990, 8068, 873-876, Carl Hanser Verlag München, 1990) allgemein beschriebenen Gasinjektionstechnik (GIT) bzw. Wahl folgender Bedingungen bei der Verarbeitung durch GIT erzielt:
- Ausblasverfahren
- Gasinjektion über beheizbaren Ringspaltgasinjektor mit reduzierter Masse im Gasaustrittsbereich
- Verwendung einer Labyrinthdichtung zur Abdichtung zwischen Schmelze und Gasinjektor
- Gaseinleitung vor dem Schmelzeanschnitt (bezogen auf Schmelzehauptfließrichtung)
- Steuerung der Fertigteilwanddicke durch Gasblasenfrontgeschwindigkeit
- Verwendung von Überlaufkavitäten und zugehörigen Überlaufkanälen, die im Volumen variabel einstellbar sind.

Gegenstand der Anmeldung ist die Verwendung thermoplastischer Formmassen bestehend aus 40 bis 80 Gew.-Teilen Polyamid, vorzugsweise PA66, 0 bis 45 Gew.-Teilen, bevorzugt 5 bis 45 Gew.-Teilen Glasfasern oder anderen faserförmigen Verstärkungsstoffen, 5 bis 45 Gew.-Teilen Glimmer oder anderen plättchenförmigen mineralischen Verstärkungs- oder Füllstoffen und 0 bis 5 Gew.-Teilen sonstiger Additive wie z.B. der üblichen Stabilisierungs- und Verarbeitungshilfsmittel und Farbstoffe, wobei die Summe aller Gewichtsteile 100 ergeben muß, zur Herstellung von Formteilen für den KFZ-Kühlkreislauf.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6,6, Polyamid-6, Mischungen und entsprechende Copolymerisate aus diesen Komponenten geeignet. Weiterhin kommen Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugt ist Polyamid-6,6.

Auch Copolymere, die durch Polykondensation mehrerer Monomerer erhalten werden, sind geeignet, ferner Copolymere, die unter Zusatz von Aminocarbonsäuren wie - Aminocapronsäure, -Aminoundecansäure oder -Aminolaurinsäure oder ihren Lactamen, hergestellt werden.

Die Polyamide weisen vorzugsweise eine relative Viskosität (gemessen an einer 1 gew.-%igen Lösung in *m*-Kresol bei 25°C) von 2,7 bis 3,5 auf.

Die erfindungsgemäßen Formmassen können Additive wie Farbmittel, Stabilisatoren (insbesondere Kupfer haltige Stabilisatoren), Gleit- und Verarbeitungshilfsmittel sowie gegebenenfalls weitere Zusatzstoffe enthalten.

Die Polyamide können zusätzlich weitere faserförmige Verstärkungsstoffe und/oder mineralische Füllstoffe enthalten. Als faserförmige Verstärkungsstoffe neben Glasfasern kommen Kohlefasem, Aramidfasern, Mineralfasern und Whisker in Betracht. Als geeignete mineralische Füllstoffe seien beispielhaft Kalziumcarbonat, Dolomit, Kalziumsulfat, Glimmer, Fluorglimmer, Wollastonit, Talkum und Kaolin genannt. Aber auch andere Oxide oder Oxidhydrate eines Elementes ausgewählt aus der Gruppe Bor, Aluminium, Gallium, Indium, Silizium, Zinn, Titan, Zirkonium, Zink, Ytrium oder Eisen können eingesetzt werden. Zur Verbesserung der mechanischen Eigenschaften können die faserförmigen Verstärkungsstoffe und die mineralischen Füllstoffe oberflächenbehandelt sein.

Bevorzugt sind Glasfasern.

Als Verstärkungsstoffe kommen neben bzw. an Stelle von Glasfasern auch C-Fasern, Aramidfasern, Mineralische Füll- bzw. Verstärkungsstoffe und ähnliche Materialien in Frage. Diese können ggf. mit Oberflächenmodifizierungen z.B. Silanen oder Glasfaserschlichten versehen sein.

Gegenstand der Anmeldung ist weiterhin die Verwendung erfindungsgemäßer Formmassen, die zusätzlich 0,01 bis 10 Gew.-Teile, besonders bevorzugt 0,3 bis 1,0 Gew.-Teile antinukleierende (kristallisationshemmende) Zusätze enthalten, wobei die Summe aller Gewichtsteile 100 ergeben muss.

Gegenstand der Anmeldung ist die Verwendung von Formmassen, bei denen es sich bei dem plättchenförmigen Verstärkungsstoff um Phlogopitglimmer handelt.

Weiterer Gegenstand ist die Verwendung der erfindungsgemäßen Formmassen zur Herstellung von Formteilen für den Kfz-Kühlkreislauf über ein Verfahren der Gasinjektionstechnik.

Weiterer Gegenstand ist die Verwendung der erfindungsgemäßen Formmassen zur Herstellung von Formteilen für den Kfz-Kühlkreislauf über Gasinjektionstechnik,
wobei bevorzugt die Schmelzeausblastechnik eingesetzt wird.

Weiterer Gegenstand ist die Verwendung der erfindungsgemäßen Formmassen zur Herstellung von Formteilen für den Kfz-Kühlkreislauf über Gasinjektionstechnik, wobei das Standard-GIT-Verfahren (Schmelzeaufblastechnik) oder die Schmelzeausblastechnik oder eine Kombination von Aufblastechnik und Ausblastechnik benutzt wird.

Weiterer Gegenstand ist ein Verfahren zur Herstellung von Formkörpern nach dem GIT-Verfahren, dadurch charakterisiert, dass kombiniert wird ein
- Ausblasverfahren
- Gasinjektion über beheizbaren Ringspaltgasinjektor mit reduzierter Masse im Gasaustrittsbereich
- Verwendung einer Labyrinthdichtung zur Abdichtung zwischen Schmelze und Gasinjektor
- Gaseinleitung vor dem Schmelzeanschnitt (bezogen auf Schmelzehauptfließrichtung)
- Steuerung der Fertigteilwanddicke durch Gasblasenfrontgeschwindigkeit
- Verwendung von Überlaufkavitäten und zugehörigen Überlaufkanälen, die im Volumen variabel einstellbar sind.

Gegenstand der Anmeldung sind auch Formkörper hergestellt gemäß einem oder mehrerer der vorangegangenen Ansprüche.

### Beispiel

### GIT-Verarbeitung

Aus den verschiedenen unter Beispiel 1 aufgeführten Materialien wurden S-förmige Kfz-Kühlwasserrohre (Gesamtlänge 250 mm, Außendurchmesser 19 mm, mittlere Wanddicke 3 mm) mit Kupplungsanschluss im Gasinjektionsverfahren (Ausblastechnik) gefertigt. Als Spritzgießmaschine wurde eine ES 700/150 der Fa. Engel verwendet. Die Gasinjektion erfolgte über einen Ringspaltgasinjektor mit einstellbarer Ringspaltweite und integrierter Labyrinthdichtung. Die Massetemperaturen wurden entsprechend den für die Materialien zutreffenden Formmassenormen zwischen 280 und 310°C eingestellt, die Werkzeugtemperatur betrug für alle Versuche ca. 80°C. Die Gasinjektion erfolgte mit Drücken von 100 bis 300 bar, in den meisten Fällen mit ca. 250 bar. Als Druckgas diente Stickstoff, der über eine Airmold-Anlage der Fa. Battenfeld dosiert wurde.

### Herstellung der Compounds

Die in den Beispielen 1 bis 4 und 11 sowie Vergleichsbeispiel 12 und 13 verwendeten Polyamidcompounds wurden durch Compoundierung von Polyamid 66 bzw. Polyamid 6 mit den in Tabelle 1 aufgeführten Verstärkungsstoffen und Additiven auf Zweiwellenextrudern ZSK 32 der Fa. Werner und Pfleiderer in der üblichen Weise (Aufschmelzen des Polymers, ggf. in Mischung mit den Additiven, Zugabe der Verstärkungsstoffe in die Polyamidschmelze, Strangabzug durch Wasserbad und anschließende Granulierung) hergestellt. Die so erhaltenen Granulate wurden vor Weiterverarbeitung bei 70°C im Vakuum auf einen Restfeuchtegehalt von < 0,12 % getrocknet.

Für die Beispiele 5 bis 10 wurden mineralgefüllte Compounds mit glasfaserverstärktem PA66 (Durethan AKV 30 HR H2.0 9005/0, Handelsprodukt der Bayer AG) in verschiedenen Verhältnissen in Granulatform physikalisch gemischt und in dieser Form (als "Dry blend") weiter verarbeitet.

### Bestimmung der mechanischen Eigenschaften im spritzfrischen Zustand bzw. nach Lagerung im Kühlmedium

Die in der Tabelle angegebenen Werte für die mechanischen Eigenschaften wurden an Normprüfkörpern 80 x 10 x 4 mm³ ermittelt, die entsprechend den zugehörigen Formmassenormen hergestellt wurden. Die Izod-Schlagzähigkeit wurde nach ISO 180 1C bestimmt, der Biege-Modul wurde im Biegeversuch nach ISO 178 ermittelt.

Für die Untersuchung des Einflusses von Kühlmedium auf die mechanischen Eigenschaften wurden ungekerbte 80 x 10 x 4 mm³ - Normprüfkörper in einem mit Kühlmedium (1l Ethylenglykol/1l Wasser) gefüllten Autoklaven bei 130°C gelagert. Dabei stellt sich ein Druck von ca. 2 bar ein. Nach 42 Tagen Lagerung unter diesen Bedingungen wurden nach Abkühlung auf Raumtemperatur die Prüfkörper entnommen, mit Wasser abgespült, abgetrocknet und in PE-Folie eingeschweißt. Nach einer Ausgleichslagerung von 4 Stunden wurden die Prüfungen durchgeführt.

| Zusammensetzung⁴⁾ | PA6 [%] | PA66 [%] | Mikroglaskugeln ¹⁾ [%] | Glasfaser ²⁾ [%] | Phlogopit-Glimmer ³⁾ [%] | Kaolin ⁵⁾ [%] | Talk ⁶⁾ [%] |
|---|---|---|---|---|---|---|---|
| Vergleichsbeispiel 1 | | 67,6 | 20 | 10 | -- | | |
| Beispiel 2 | | 67,6 | | 10 | 20 | | |
| Beispiel 3 | | 57,6 | | 10 | 30 | | |
| Beispiel 4 | | 57,6 | | | 40 | | |
| Beispiel 5⁷⁾ | 43,2 | 22,6 | | 10 | | 20 | |
| Beispiel 6⁸⁾ | 48,6 | 16,9 | | 7,5 | | 22,5 | |
| Beispiel 7⁹⁾ | 27,7 | 38,2 | | 12,3 | | 17,7 | |
| Beispiel 8¹⁰⁾ | | 63,7 | | 10 | | | 20 |
| Beispiel 9¹¹⁾ | | 59,4 | | 7,5 | | | 22,5 |
| Beispiel 10¹²⁾ | | 61,1 | | 12,3 | | | 17,7 |
| Beispiel 11 | | 64,8 | | 10 | | 20 | |
| Vergleichsbeispiel 12 | | 99,5 | | | | | |
| Vergleichsbeispiel 13 | | 67,6 | | 30 | | | |

| | | | | | | | |
|---|---|---|---|---|---|---|---|
| 1) CP 3000 Handelsprodukt der Fa. Potters Ballotini | | | | | | | |
| 2) Vetrotex P 955, Handelsprodukt der Fa. Vetrotex | | | | | | | |
| 3) z.B. Kemira Mica 100S der Fa. Kemira oder Mica 5100 S Handelsprodukt der Fa. Polar Minerals | | | | | | | |
| 4) Alle Zusammensetzungen enthalten als Thermostabilisator Kupferiodid (300 bis 400 ppm) im Gemisch mit Kaliumbromid 800 bis 1000 ppm), ca. 0,2 % Entformungshilfsmittel (Amidwachs oder Montanesterwachs), 0,2 bis 0,8 % Schwarzmittel (Ruß, Nigrosin) und ca. 200 ppm Mikrotalkum als Nukleierungsmittel | | | | | | | |
| 5) Polarite 102 A d. Fa. Imerys | | | | | | | |
| 6) Naintsch A 60, Handelsprodukt der Fa. Talc de Luzenac | | | | | | | |
| 7) Mischung aus 33,3 % PA66 GF30 (Durethan AKV 30HR H2.0 99005/0, Handelsprodukt der Bayer AG), mit 66,7 % Durethan BM 230 H2.0 9005/0 (Handelsprodukt der Bayer AG) | | | | | | | |
| 8) 25 % Durethan AKV 30HR H2.0 9005/0 (Handelsprodukt der Bayer AG) 75 % Durethan BM 230 H2.0 9005/0 (Handelsprodukt der Bayer AG) | | | | | | | |
| 9) 41 % Durethan AKV 30 HR H2.0 9005/0 (Handelsprodukt der Bayer AG) 59 % Durethan BM 230 H2.0 9005/0 (Handelsprodukt der Bayer AG) | | | | | | | |
| 10) 33,3 % Durethan AKV 30 HR H2.0 9005/0 (Handelsprodukt der Bayer AG) 66,7 % Durethan AM 140 H2.0 9005/0 (Handelsprodukt der Bayer AG) | | | | | | | |
| 11) 25 % Durethan AKV 30 HR H2.0 9005/0 (Handelsprodukt der Bayer AG) 75 % Durethan AM 140 H2.0 9005/0 (Handelsprodukt der Bayer AG) | | | | | | | |
| 12) 41 % Durethan AKV 30 HR H2.0 9005/0 (Handelsprodukt der Bayer AG) 59 % Durethan AM 140 H2.0 9005/0 (Handelsprodukt der Bayer AG) | | | | | | | |

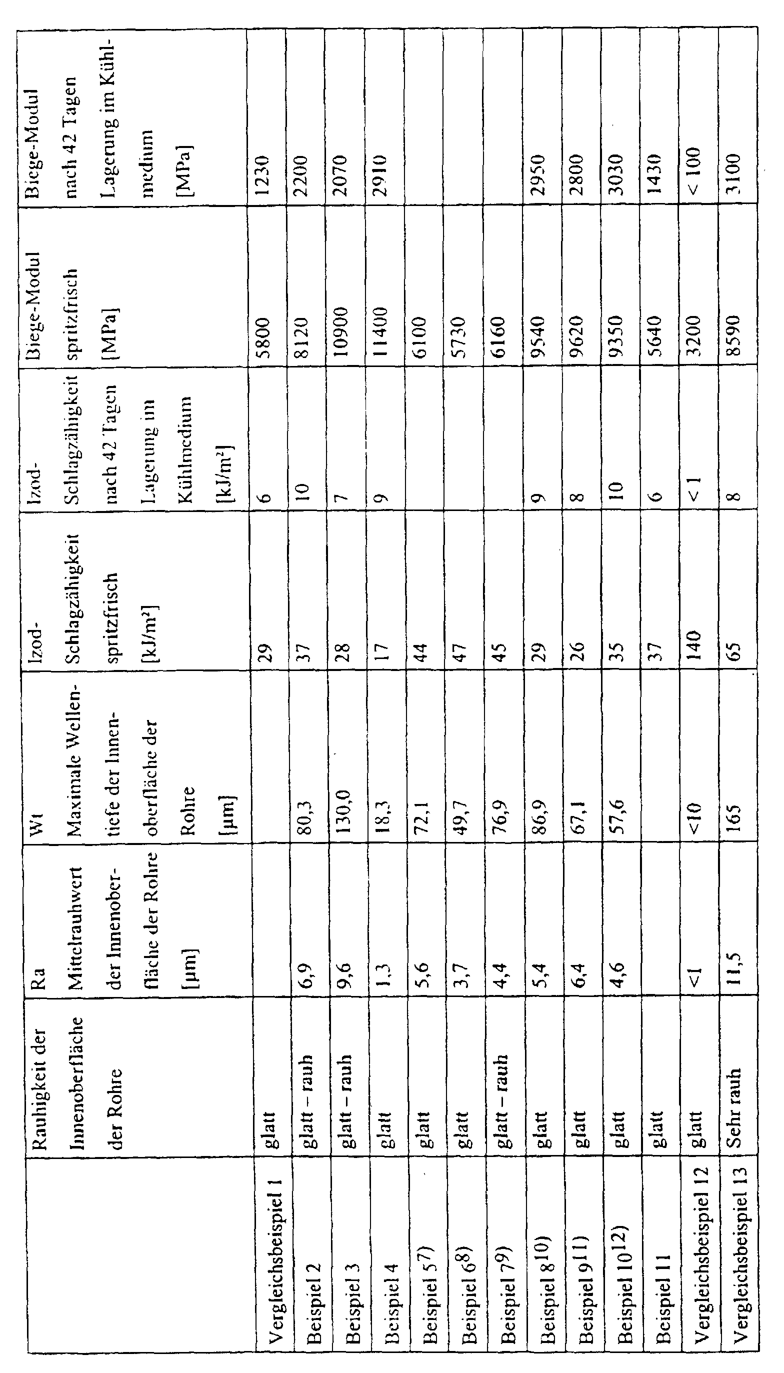

## Patentansprüche

1. Verwendung von thermoplastische Formmassen bestehend aus 40 bis 80 Gew.-Teilen Polyamid, 0 bis 45 Gew.-Teilen, Glasfasern oder anderen faserförmigen Verstärkungsstoffen, 5 bis 45 Gew.-Teile Glimmer oder anderen plättchenförmigen mineralischen Verstärkungs- oder Füllstoffen und 0 bis 5 Gew.-Teilen Additive, wobei die Summe aller Gewichtsteile 100 ergeben muss, zur Herstellung von Formteilen für den KFZ-Kühlkreislauf.

2. Verwendung von Formmassen gemäß Anspruch 1, die zusätzlich 0,01 bis 10 Gew.-Teile antinukleierende Zusätze enthalten, wobei die Summe aller Gewichtsteile 100 ergeben muss.

3. Verwendung von Formmassen gemäß Anspruch 1 und/oder 2, bei denen es sich bei dem plättchenförmigen Verstärkungsstoff um Phlogopitglimmer handelt.

4. Verwendung der Formmassen gemäß einem oder mehrerer der vorangegangenen Ansprüche zur Herstellung von Formteilen für den Kfz-Kühlkreislauf über ein Verfahren der Gasinjektionstechnik.

5. Verwendung der Formmassen gemäß einem oder mehrerer der vorangegangenen Ansprüche zur Herstellung von Formteilen für den Kfz-Kühlkreislauf über Gasinjektionstechnik, wobei das Standard-GIT-Verfahren (Schmelzeaufblastechnik) oder die Schmelzeausblastechnik oder eine Kombination von Aufblastechnik und Ausblastechnik genutzt wird.

6. Verfahren zur Herstellung von Formkörpern nach dem GIT-Verfahren, dadurch charakterisiert, dass kombiniert wird
• Ausblasverfahren
• Gasinjektion über beheizbaren Ringspaltgasinjektor mit reduzierter Masse im Gasaustrittsbereich
• Verwendung einer Labyrinthdichtung zur Abdichtung zwischen Schmelze und Gasinjektor
• Gaseinleitung vor dem Schmelzeanschnitt (bezogen auf Schmelzehauptfließrichtung)
• Steuerung der Fertigteilwanddicke durch Gasblasenfrontgeschwindigkeit
• Verwendung von Überlaufkavitäten und zugehörigen Überlaufkanälen, die im Volumen variabel einstellbar sind.

7. Formkörper hergestellt gemäß einem oder mehrerer der vorangegangenen Ansprüche.

## Claims

1. Use of thermoplastic moulding compositions consisting of 40 to 80 parts by weight of polyamide, 0 to 45 parts by weight of glass fibres or other fibrous reinforcing materials, 5 to 45 parts by weight of mica or other lamellar mineral reinforcing materials or fillers and 0 to 5 parts by weight of additives, wherein the sum of all the weight percentages must be 100, for the production of mouldings for the automotive coolant circuit.

2. Use of the moulding compositions according to claim 1, which additionally contain 0.01 to 10 parts by weight of antinucleating additives, wherein the sum of all the weight percentages must be 100.

3. Use of the moulding compositions according to claim 1 and/or 2, in which the lamellar reinforcing material is phlogopite mica.

4. Use of the moulding compositions according to one or more of the preceding claims for the production of mouldings for the automotive coolant circuit by means of a gas-assisted injection moulding process.

5. Use of the moulding compositions according to one or more of the preceding claims for the production of mouldings for the automotive coolant circuit by means of a gas-assisted injection moulding process, wherein the standard GAIM process (melt inflation method) or the melt expulsion method or a combination of inflation and expulsion methods is used.

6. A process for the production of mouldings using the GAIM process, **characterised in that** the following are combined
• expulsion process
• gas injection via heatable annular slit gas injector with reduced melt in the gas outlet zone
• use of a labyrinth seal to provide a seal between the melt and gas injector
• gas inlet upstream from the melt gate (relative to main direction of melt flow)
• control of wall thickness of finished part by velocity of gas bubble front
• use of overflow cavities and associated overflow channels, the volume of which is adjustable.

7. Mouldings produced according to one or more of the preceding claims.

## Revendications

1. Utilisation de matières à mouler thermoplastiques consistant en 40 à 80 parties en poids d'un polyamide, 0 à 45 parties en poids de fibres de verre ou d'autres matières renforçantes fibreuses, 5 à 45 parties en poids de mica ou d'autres matières renforçantes ou matières de charge minérale en tablettes et 0 à 5 parties en poids d'additifs, la somme de ces parties en poids représentant 100, pour la fabrication de pièces moulées destinées à des circuits de refroidissement de véhicules.

2. Utilisation de matières à mouler selon la revendication 1, contenant en outre 0,01 à 10 parties en poids d'additifs anti-nucléation, la somme des parties en poids représentant 100.

3. Utilisation des matières à mouler selon la revendication 1 et/ou 2 dans lesquelles la matière renforçante en tablettes est du mica phlogopite.

4. Utilisation des matières à mouler selon une ou plusieurs des revendications qui précèdent pour la fabrication de pièces moulées destinées à des circuits de refroidissement de véhicules par l'une des techniques avec injection de gaz.

5. Utilisation des matières à mouler selon une ou plusieurs des revendications qui précèdent pour la fabrication de pièces moulées destinées à des circuits de refroidissement de véhicules par une technique avec injection de gaz, à savoir la technique classique GIT (technique avec refoulement par soufflage de la masse fondue) ou la technique avec purge de la masse fondue ou une combinaison de la technique avec refoulement et de la technique avec purge.

6. Procédé pour la fabrication de pièces moulées par la technique GIT, **caractérisé en ce que** l'on combine
- technique de purge par soufflage
- injection de gaz par un injecteur à gaz chauffable à fente annulaire, avec dimensions réduites dans la région de sortie des gaz
- utilisation d'un joint en labyrinthe pour l'étanchéité entre la masse fondue et l'injecteur à gaz
- injection de gaz avant entrée de la masse fondue (par rapport à la direction principale d'écoulement de la masse fondue)
- réglage de l'épaisseur de paroi de la pièce finie par la vitesse frontale d'insufflation du gaz
- utilisation de cavités de débordement et de canaux correspondants de débordement, dont le volume peut être réglé.

7. Corps moulés fabriqués selon une ou plusieurs des revendications qui précèdent.
